# EUROPEAN PATENT APPLICATION

(11) **EP 1 143 542 A1**
(43) Date of publication of application: **10.10.2001**
(21) Application number: 01100228.4
(22) Date of filing: 03.01.2001
(51) Int. Cl.: H01M 2/30, H01M 2/04

(54) **Battery with flank terminals and method of manufacturing the same**

(30) Priority: 21.01.2000 CN 00202810 U
(71) Applicant: Xiongtao Power Supply Technology Co., Ltd., Shenzhen 518020 (CN)
(72) Inventor: Zhang, Huanong, Wuhan Hubei 430015 (SH)
(74) Representative: Grättinger & Partner (GbR)

(57) **Abstract**

A method and product of battery with flank terminals. The method includes the following steps: ① Fix the positive and negative terminals 37 and 48 onto the side walls of the container 10, and connect them with the positive and negative posts 35 and 46 respectively; ② Press the main cover 60 onto the container 10 and seal with adhesive. During step ②, the terminals 37 and 48 go through the outside vertical straight-through slots 65 and 66 located in one or separately in both side walls of the main cover. The advantages of this invention lie in that the said terminal leads are located in the side walls of the container and lower than the battery top surface, resulting in prevention of short circuit caused by falling metal objects, increase of battery application safety and facilitation of user' s connections, saving of space for storage and application, and combination of two sealing operations into only one.

## Description

The invention involves in the way of electric connections and casing structure of battery, especially the way of leading to the positive and negative terminals from the side wall(s) of secondary battery, as well as the battery with this kind of flank terminals.

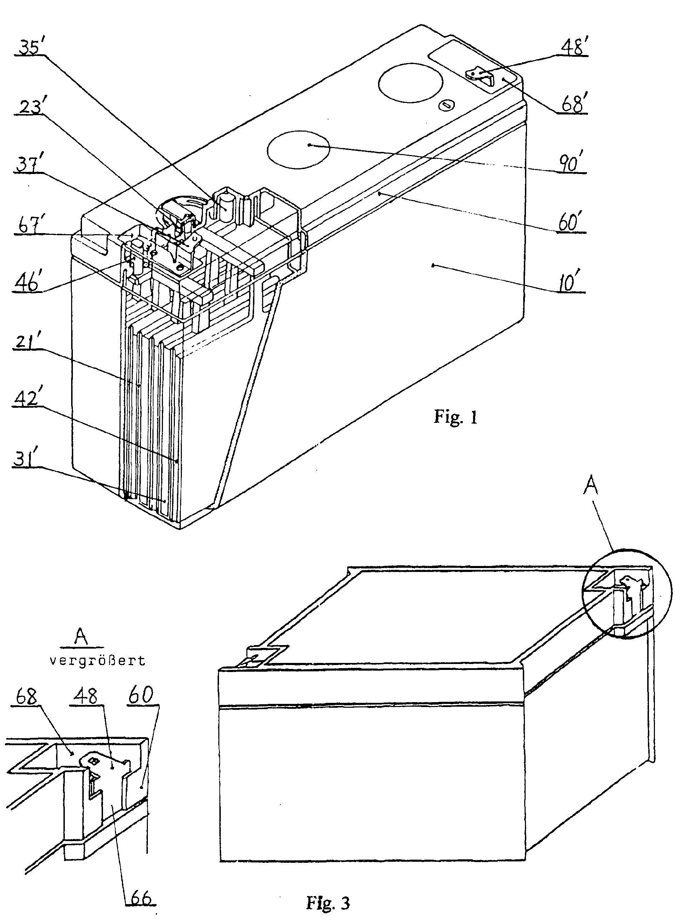

The batteries involved in the invention include primary, secondary, fuel and combined batteries. For the secondary batteries in prior art, such as the sealed lead-acid storage batteries, the casings generally have a structure shown in Fig. 1, comprising container 10', main cover 60' and top cover 90'. Inside the container are positive and negative plates 31' and 42' arranged in intervals with separators 21' in between. All the positive plates 31' are connected in parallel and welded to the positive post 35'. All the negative plates 42' are connected in parallel and welded to the negative post 46'. The main cover 60' is pressed onto the container 10' and sealed with resin. The above said positive and negative posts 35' and 46' go through the positive and negative terminal openings 67' and 68' in the main cover 60' and are welded with positive and negative terminal lugs 37' and 48', the lower part of which have larger areas, respectively. Sealant resin is filled in the remaining gaps of the two terminal openings 67' and 68'. Electrolyte is filled inside and the injection opening is then covered with the rubber safety vent 23'. The drawbacks of the prior art lie in that the two working operations are needed to put on and seal the main cover 60', and to weld and seal the terminal lugs 37' and 48'; the said terminals 37' and 48' are prone to be short-circuited by metal objects falling on them because of their location higher than the top cover 90'; connections can only be made on the top of batteries by users; large space is occupied and connections are not easy to make.

The aim of this invention is to avoid the above mentioned drawbacks of the prior art and to provide a method of leading to terminals from the side wall(s) of battery and a product. The design is to locate the positive and negative terminals on the side wall(s) of battery lower than the top surface of the battery. This method can not only eliminate short circuit by falling metal objects, increase safety in operation, but facilitate also users to make connections and save space for storage and application. At the same time the two working operations can be reduced to only one.

The aim of this invention can be executed in the following technical plan: to adopt a method of flank terminals for battery, including connection of all the positive plates inside the container in parallel and connection to the corresponding positive post, as well as connection of all the negative plates in parallel and connection to the negative post. The method also includes the following steps: ① The positive and negative terminals are fixed on the side wall(s) of the container, connected to the positive and negative posts respectively; ② The main cover is pressed onto the container and sealed with adhesive. In this case, the positive and negative terminals go through outside vertical straight-through slots in one or separately in both side wall(s) of the main cover.

The aim of this invention can also be realized through the following measures: design and manufacture a battery with flank terminals, inside the container of which are positive and negative plates arranged in intervals with separators in between, all the positive and negative plates are connected in parallel separately and connected to the positive and negative posts respectively. The main cover is pressed onto the container and sealed with adhesive. Particularly, the positive and negative terminals are located in the side wall(s) of the battery and connected to the positive and negative posts respectively.

Remarks on the drawings attached:
Fig. 1: Sketch of electrode plates assembly and connections of lead-acid storage batteries in prior art
Fig.2 : Exploded view of electric connections in this invention "Battery with flank terminals "
Fig.3 : Sketch with part amplified view of this invention --- battery with terminals located in the side wall(s)

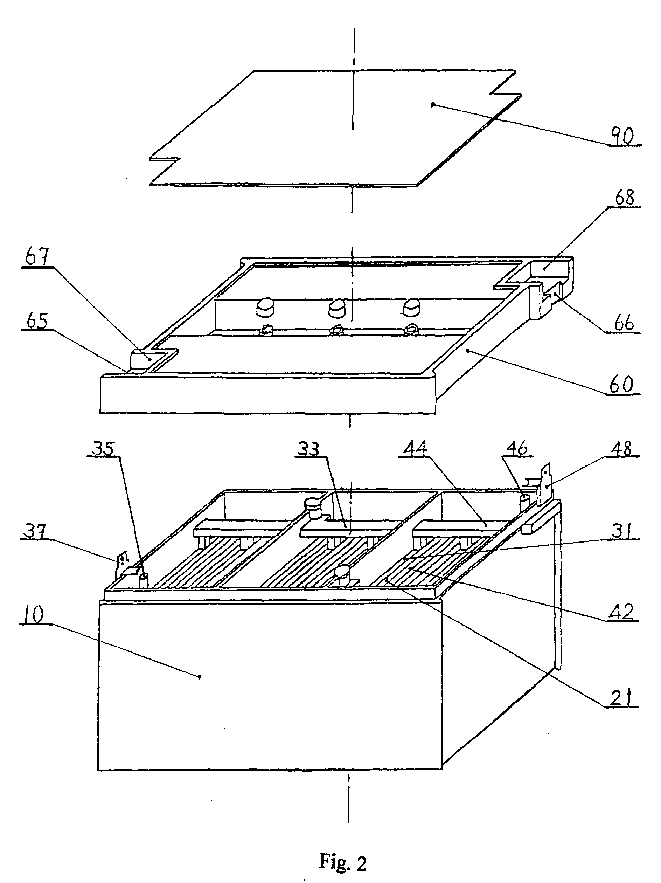

Based on the preferred embodiment shown in the figures attached, further description follows. The method of battery with flank terminals in this invention, see Fig.2, includes connection of all the positive plates 31 inside the container 10 in parallel and connection to the corresponding positive post 35, as well as connection of all the negative plates 42 in parallel and connection to the negative post 46. Following steps are also included in this method:
① The positive and negative terminals 37 and 48 are fixed in the side wall(s) of the container 10, connected to the positive and negative posts 35 and 46 respectively;
② The main cover 60 is pressed onto the container 10 and sealed with adhesive.

During step ②, the said positive and negative terminals 37 and 48 go through the outside vertical straight-through slots 65 and 66 in one or separately in both side wall(s) of the main cover 60. Furthermore, step ② is followed by step ③.

That is to place top cover 90.

The adhesive used in step ② is generally epoxy resin. Solidified agent is also needed. After step ②, top of the said positive and negative terminals 37 and 48 should be lower than the top surface of the main cover 60 or top cover 90.

The product of this invention, namely the battery with flank terminals is shown in Fig.2 and Fig.3. Inside the container 10 of which are positive and negative plates 31 and 42 arranged in intervals with separator 21 in between. All the positive plates 31 are connected in parallel and then connected to the positive post 35. All the negative plates 42 are connected in parallel and connected to the negative post 46. The main cover 60 is pressed onto the container 10 and sealed with adhesive. Particularly, the positive and negative terminals 37 and 48 are placed in the side wall(s) of the container 10 and connected to the positive and negative posts 35 and 46 respectively.

For the said main cover 60 of the battery in this invention, the outside vertical straight-through slots 65 and 66 are located in one or separately in both side wall(s) of the main cover 60. There are two inward recesses 67 and 68 at the slots 65 and 66 set up in the main cover 60. The said positive and negative terminals 37 and 48 of the battery are fixed vertically at the top edge of one or separately both side wall(s) of the container 10, and go through the slots 65 and 66 in the main cover 60 which is pressed onto the container 10.

In order to eliminate short circuit caused by falling metal objects onto the top surface of the battery, the positive and negative terminals 37 and 48 in this invention are fixed in the side wall(s) of the container 10, and the top of terminals 37 and 48 is lower than the top surface of the main cover 60 and top cover 90. An alternative is to make the said terminals 37 and 48 are bent slightly inward into the recesses 67 and 68.

Compared with the prior art, the method and product of this invention is characterized by its outstanding advantages in the fact that the positive and negative terminal lugs of the battery are located in the side wall(s) of the container and lower than the top surface of battery, resulting in elimination of short circuit caused by falling metal objects, increase of application safety and facilitation of user's connection, as well as saving of space for storage and application, and combination of two sealing operations to only one.

## Claims

1. A method of battery with flank terminals, including connection of all the positive plates (31) inside the container (10) in parallel and connection to the corresponding positive post (35), as well as connection of all the negative plates (42) in parallel and connection to the negative post (46). The method is characterized by:
The following steps are also included:
① The positive and negative terminals (37) and (48) are fixed in the side wall(s) of the container (10), connected to the positive and negative posts (35) and (46) respectively;
② The main cover (60) is pressed onto the container (10) and sealed with adhesive.

2. The method of battery with flank terminals according to Claim 1 is characterized by:
During step ② the said positive end negative terminals (37) and (48) go through the outside vertical straight-through slots (65) and (66) in one or separately in both side walls of the main cover (60).

3. The method of battery with flank terminals according to Claim 1 is characterized by:
There is still step ③ after step ②, i.e. to place the top cover (90).

4. The method of battery with flank terminals according to Claim 1 is characterized by:
After completion of step ②, the top of the said positive and negative terminals (37) and (48) should be lower than the top surface of the main cover (60) or the top cover (90).

5. A kind of battery with flank terminals, inside the container (10) of which are positive and negative plates (31) and (42) arranged in intervals with separator (21) in between; all the positive plates (31) are connected in parallel and then connected to the positive post (35), all the negative plates (42) are connected in parallel and connected to the negative post (46); the main cover (60) pressed onto the container (10) and sealed with adhesive, is characterized by:
The positive and negative terminals (37) and (48) are placed in the side wall(s) of the container (10) and connected to the positive and negative posts (35) and (46) respectively.

6. The battery with flank terminals according to Claim 5 is characterized by:
The outside vertical straight-through slots (65) and (66) are located in one or separately in both side walls of the main cover (60).

7. The battery with flank terminals according to Claim 5 is characterized by:
There are two inward recesses (67) and (68) at the slots (65) and (66) set up in the main cover (60).

8. The battery with flank terminals according to Claim 5 is characterized by:
The said positive and negative terminals (37) and (48) are fixed vertically at the top edge of one or separately both side walls of the container (10), and go through the slots (65) and (66) in the main cover (60) which is pressed onto the container (10).

9. The battery with flank terminals according to Claim 5 is characterized by:
The said positive and negative terminals (37) and (48) are fixed in the side wall(s) of the container (10), and the top of the terminals (37) and (48) are lower than the top surface of the main cover (60) and the top cover (90).

10. The battery with flank terminals according to Claim 5 is characterized by:
The said positive and negative terminals (37) and (48) are bent slightly inward into the recesses (67) and (68).
